## Europäisches Patentamt
## European Patent Office
## Office européen des brevets

(19)

(11) **EP 0 682 610 B1**

(12) ## EUROPÄISCHE PATENTSCHRIFT

(45) Veröffentlichungstag und Bekanntmachung des Hinweises auf die Patenterteilung:
**11.09.1996 Patentblatt 1996/37**

(21) Anmeldenummer: **94906863.9**

(22) Anmeldetag: **07.02.1994**

(51) Int Cl.⁶: **B60R 25/10**

(86) Internationale Anmeldenummer:
**PCT/DE94/00142**

(87) Internationale Veröffentlichungsnummer:
**WO 94/18039 (18.08.1994 Gazette 1994/19)**

(54) **DIEBSTAHL-SICHERUNGSVORRICHTUNG**

ANTI-THEFT DEVICE

DISPOSITIF ANTI-VOL

(84) Benannte Vertragsstaaten:
**AT CH DE ES FR GB IT LI NL SE**

(30) Priorität: **06.02.1993 DE 9301684 U**
**12.11.1993 DE 4339234**

(43) Veröffentlichungstag der Anmeldung:
**22.11.1995 Patentblatt 1995/47**

(73) Patentinhaber: **Haggert, Horst-Jürgen**
**W-64579 Gernsheim (DE)**

(72) Erfinder: **Haggert, Horst-Jürgen**
**W-64579 Gernsheim (DE)**

(74) Vertreter: **Christiansen, Henning, Dipl.-Ing.**
**Patentanwalt**
**Pacelliallee 43/45**
**14195 Berlin (DE)**

(56) Entgegenhaltungen:
| | |
|---|---|
| EP-A- 0 350 325 | DE-U- 9 301 684 |
| GB-A- 2 210 484 | US-A- 4 638 294 |
| US-A- 4 901 054 | US-A- 5 153 558 |

**Beschreibung**

Die erfindung betrifft eine Diebstahl-Sicherungsvorrichtung der im Oberbegriff des Anspruchs 1 angegebenen Art.

Die erheblichen Steigerungsraten bei der Eigentums-Kriminalität, insbesondere beim Diebstahl von Kraftrahreugen, macht entsprechende Diebstahlsicherungen bzw. Wegfahrsperren notwendig. Unter anderem sind alarmauslösende Diebstahlsicherungen bekannt, bei denen bei unbefugter Benutzungsabsicht die Fahrzeugbatterie von den für den Betrieb des Kraftfahrzeugs wesentlichen Baugruppen (beispielsweise dem Anlasser) unabhängig vom zündschloß elektrisch abgetrennt werden und über die unbefugte Benutzungsabsicht zusätzlich durch akustische und/oder optische Signale informiert wird. Die unbefugte Benutzungsabsicht wird durch an geeigneter Stelle vorgesehene Sensoren (Erschütterungs- und Neigungsmelder oder Kontakte an Türen bzw. der Kofferhaube) erfaßt und in ein geeignetes Signal umgeformt, welches seinerseits den Alarm mit allen vorgesehenen Maßnahmen auslöst.

Es sind Alarmanlagen bekannt, bei denen die Fahrzeugbatterie von wichtigen Verbrauchern durch einen statisch gesteuerten Halbleiterschalter abtrennbar ist und die unbefugte Inbetriebnahme des Kraftfahrzeuges durch einen Alarmmelder angezeigt wird bzw. eine Anzeigevorrichtung für Niveauänderungen bei einem Kraftfahrzeug vorgesehen ist.

Diese bekannten Lösungen weisen unabhängig von der Qualität ihrer Sicherungsfunktion den Nachteil auf, daß sie für ihren Betrieb bzw. die Aufrechterhaltung ihrer wesentlichen Sicherheitsfunktionen - wenn auch relativ wenig - elektrische Energie benötigen, welche aus der Fahrzeugbatterie entnommen wird. Da die Position der Fahrzeugbatterie bekannt und diese bei den für Diebstählen bevorzugten Fahrzeugtypen im Motorraum vorgesehen ist, können spezialisierte Diebe nach Öffnen der Motorhaube die installierten sicherungsanlagen durch Lösen der Anschlußkabel vom Plus-Pol der Fahrzeugbatterie äußerst schnell außer betrieb nehmen. Das gegebenenfalls kurzfristige optische oder akustische Alarmsignal wird - wenn überhaupt ausgelöst häufig von Passanten oder Hausbewohnern ignoriert und verliert somit seine zuverlässige Sicherungsfunktion.

Eine Vorrichtung mit den Merkmalen des Oberbegriffs von Anspruch 1 ist aus EP-A-0 350 325 bekannt. Die dort beschriebene Vorrichtung sieht - neben einer Kapselung der gesamten Batterie - insbesondere armierte Verbindungskabel von der Batterie zum Bordnetz des Kraftfahrzeuges vor.

Die Vorrichtung ist insofern noch verbesserungsbedürftig, als auch ein Kabel, das mit in der Großserienfertigung praktikablen Mitteln armiert wird, mit handelsüblichen Trennwerkzeugen (wie einem Bolzenschneider) vergleichsweise leicht durchtrennt werden kann, womit auch hier die Verbindung der Diebstahl-Siche-

rungsvorrichtung mit der Fahrzeugbatterie trotz der Armierung unterbrochen werden kann.

Ausgehend von den Mängeln des Standes der Technik liet der Erfindung die Aufgabe zugrunde, eine Diebstahl-Sicherungsvorrichtung der eingangs genannten Gattung zu schaffen, welche trotz Energie-Bezug aus der Fahceugsbatterie nicht ohne weiteres außer Betrieb gesetzt werden kann, wenn sie durch eine unbefugte Benutzungshandlung ausgelöst worden ist.

Diese Aufgabe wird mit den kennzeichnenden Merkmalen des Anspruchs 1 gelöst.

Bei einer bevorzugten Ausführung der Erfindung wird gleichzeitig die wesentliche (insbesondere einzige) von der Kraftfahrzeugmasse getrennte Stromleitung, nachdem sie vom entsprechenden Anschlußpol der Batterie getrennt ist, mit dieser Masse verbunden, so daß bei dem Versuch, eine Fremdbatterie anzuschließen, ein Kurzschluß entsteht.

Entsprechend einer bevorzugten Ausführungsform der Erfindung weist die Diebstahl-Sicherungsvor=ichtung erste Mittel zur Alarmauslösung sowie dessen Anzeige und ein zweites Mittel zum Abtrennen des Plus-Pols cer Fahrzeug-Batterie von den für den Betrieb des Kraftfahrzeugs wesentlichen Verbrauchern auf. Der Alarm wird durch einen der angeschlossenen Sensoren ausgelöst, der eine Steuerung zur Betätigung eines Schalters zum Abtrennen der Verbraucher vom Plus-Pol der Eahrzeug-Batterie und eines Alarm-melders einschaltet.

Die Steuerung und der Sensor benötigen für ihren Betrieb eine geringe elektrische Energie, welche der Fahrzeug-Batterie entnommen wird. Um zu verhindern, daß die durch Unbefugte ausgelöste Diebstahl-Sichecungsvo,richtung durch diese Personen durch Abklemmen der Batterie des Kraftfahrzeugs wieder entaktiviert werden kann, ist die mit den Batterie-Polen versehene Oberseite der Fahrzeugbatterie durch eine Kapselung vor einem unbefugten Zugriff gesichert. Die vorgenannten ersten und zweiten Mittel der Diebstahl-Sicherungsvorrichtung (Trennschalier, Steuerung, Sensor, Alarmgeber) sind in günstiger Weise in einem zwischen den Batterie-Polen bzw. dem Batterie-Gehäuse und der Kapselung vorhandenen Freiraum angeordnet und dadurch gleichfalls vor einem unbefugten zugriff geschützt. Die Kapselung ist fest mit dem Batterie-Körper verbunden.

Nach einer anderen günstigen Weiterbildung der Erfindung ist die Kapselung derart ausgebildet, daß sie bei Einschluß der ersten und zweiten Mittel der Diebstahl-Sicherungsvorrichtung die Fahrzeug-Batterie vollständig umgibt.

Um zu verhindern, daß die Fahrzeug-Batterie zusammen mit der Diebsiahl-sicherungsvorrichtung von dem entsprechenden Kraftfahrzeug durch (auch spezialisierte) Unbefugte ohne besonderen Aufwand entfernt werden kann, ist die Abdeckung bzw. die Kapselung der Fahrzeug-Batterie durch geeignete Mittel an der Karosserie des Kraftfahrzeugs befestigt und kann nur mittels spezieller Werkzeuge zerstörungsfrei abgebaut werden.

Die Anordnung der sicherungstechnischen Mittel innerhalb der Kapselung der Fahrzeug-Batterie und eine Sicherung der Verbindungsleitung vom Plus-Pol der Fahrzeug-Batterie zu den elektrischen Verbrauchern des Fahrzeugs durch eine ausreichend armierte Umhüllung, welche sich von der Fahrzeug-Batterie bis zu einer ersten Durchführung in der Fahrzeugkarosserie erstreckt, gewährleistet in vorteilhafter Weise einerseits, daß die Stromversorgung des Alarmgebers, des Sensors und der durch den Sensor aktivierbaren Steuerung nicht durch Unbefugte, sondern nur mit Spezialwerkzeug unterbrochen werden kann und daß andererseits die Diebstahl-Sicherungsanlage - einmal ausgelöst - nicht unbemerkt wieder ausgeschaltet werden und das Kraftfahrzeug erneut (beispielsweise unter Benutzung einer externen Fahrzeug-Batterie) fahrtüchtig gemacht werden kann. In diesem Zusammenhang ist eine andere Weiterbildung der Erfindung von besonderem Vorteil, wonach der vom Plus-Pol der Fahrzeug-Batterie im Alarmfall abgetrennte Verbraucheranschluß sofort an den Masse-Anschluß des Kraftfahrzeugs schaltbar ist.

Entsprechend einer weiteren vorteilhaften Ausführungsfcrm der Erfindung ist der Aktivitätssensor als Bewegungsmelder ausgebildet, welcher auf geringe Erschütterungen oder Neigungsänderungen des Kraftfahrzeugs reagiert. Durch seine Anordnung innerhalb der Abdeckung bzw. der Kapselung wird er mit nahezu absoluter Sicherheit wirksam, wenn durch Personen unbefugte Handlungen im Bereich der Fahrzeug-Batterie vorgenommen werden. Dies führt in günstiger Weise zusätzlich zu einer besonderen Wirksamkeit der erfindungsgemäßen Diebstahl-sicherungsvorrichiung.

Nach einer anderen günstigen weiterbildung der Erfindung sind mehrere Sensoren und Alarmmelder bzw-geber für die Diebstahl-Sicherungsvorrichtung vorgesehen. Von diesen ist jeweils einer innerhalb der Abdeckung bzw. der Kapselung angeordnet, wogegen die restlichen Sensoren und Alarmmelder an für Unbefugte schlecht zugänglichen Punnkten des zu sichernden Kraftfahrzeugs vorgesehen sind. Dabei ist eine logische Verknüpfung der Sensoren vorteilhaft, wobei entweder der eine oder jeweils ein anderer Sensor die Steuerung einschaltet. Die jeweiligen Alarmmelder sind parallelgeschaltet und mit dem Ausgang der durch die Sensoren einschaltbaren Steuerung verbunden. Dabei ist zur Erhöhung der Zuverlässigkeit der Diebstahl-Sicherungsvorrichtung mindestens einer der Alarmmelder mit einer von der Fahrzeug-Batterie unabhängigen Stromversorgung ausgerüstet.

Die Diebstahl-sicherungsvorrichtung ist durch den befugten Benutzer des zu sichernden Kraftfahrzeugs in Betriebsbereitschaft versetzbar bzw. es kann durch ihn diese Betriebsbereitschaft unterbrochen werden, wenn das Kraftfahrzeug benutzt werden soll. Dazu wird die innerhalb der Abdeckung bzw. der Kapselung befindliche Steuerung aktiviert bzw. entaktiviert. Dazu ist eine Kode-Eingabeeinrichtung vorgesehen, über welche manuell mittels Tastatur oder eine entsprechende Magnetkarte ein Nummern-Kode eingebenen werden kann. Alternativ ist eine Aktivierung der Steuerung mittels eines Türkontakts bei Schließen der Fahrertür und die Deaktivierung mit einem am Zündschloß hinterlegten Kode durch Betätigen des Zündschlosses sinnvoll. Der für den Fahrzeug-Benutzer erforderliche Sicherheitszeitraum wird durch eine zeitverzögerung geeigneter Länge gewährleistet.

Darüberhinaus ist nach einer anderen Ausführungsform der Erfindung für die in der Kapselung vor unbefugtem Zugriff gesicherte Steuerung ein Controller mit elektronischen Mitteln - vorzugsweise in Form von Verzögerungsschaltungen und diese Verzögerungsschaltungen ansteuernden logischen Schaltmitteln-vorgesehen, um unterschiedliche Alarm- und Sicherungsfunktionen realisieren zu können.

Die gewünschten Alarm- und Sicherungsfunktionen unterscheiden sich durch ihren Zeittakt und ihre Sicherheitswirkung. Entsprechend dieser Weiterbildung der Erfindung ist es in günstiger Weise möglich, einen Alarm mit einer Mindestverzögerung von 30 Sekunden, einen Voralarm mit anschließendem Sofortalarm, Aktivierung einer Wegfahrsperre (insbesondere unter Berücksichtigung einer möglichen Car-Jacking-Gefahr) bzw. Vorgabe eines Sonder-Codes für Benutzung des Fahrzeuges durch eine mit der Fahrzeug-Reparatur beauftragten Person (Werkstatt-Betrieb). Dabei ist es besonders vorteilhaft, das Anlegen (oder Nicht-Anlegen) des Sicherheitsgurtes in das Alarm- und Sicherungs-System einzubeziehen. Die Dauer eines Alarms ist in günstiger Weise auf ca. 30 Sekunden festgelegt, da die Sicherungs-Vorrichtung nach Ende des Alarms erneut scharf geschaltet wird.

Zum zusätzlichen Erzielen eines Schutzes vor einem "Car-Jacking", d.h. einem gewaltsamen Entwenden des betriebsbereiten Fahrzeugs, ist eine Zusammenführung der Schaltzustände der ordnungsgemäß entaktivierten Wegfahrsperre, eingeschalteter Zündung und einem angelegten Sicherheitsgurt sowie Öffnung einer der Fahrzeugtüren von außen vorgesehen. In diesem Fall wird die Wegfahrsperre des betroffenen Fahrzeugs erneut für einen vorgebbaren Zeitraum aktiviert, um eine Inbetriebnahme des Fahrzeugs zu unterbinden. Gemäß einer günstigen Weiterbildung der sicherheitsvorrichtung ist eine Entaktivierung auch durch Eingabe des üblichen Sicherheits-Kodes nicht mehr möglich.

Für die Sicherstellung einer ständigen Betriebsbereitschaft der Diebstahl-Sicherungsvorrichtung, insbesondere der Steuerung, ist eine sogenannte Watchdog-Einrichtung vorgesehen.

Gemäß einer zusätzlichen Weiterbildung sind alle aus der Batterie-Abdeckung oder -Kapselung herausgeführten Leitungsverbindungen (Leiter) mit einer festen Hülle mit einer Armierung versehen, welche derart bemessen ist, daß die Leitungsverbindung nicht mit herkömmlichen Mittel und normalem Krafteinsatz durchtrennt werden kann. Für den Fall, daß diese Armierung durch Gewaltanwendung überwunden wird (um beispielsweise eine andere Batterie anschließen zu können), ist eine weitere Sicherung vorgesehen: Die Leitungsverbindungen weisen in der den Potential führenden Leiter umgebenden Kunststoff-Umhüllung ein erstes metallisches Drahtgeflecht auf. Ein zweites metallisches Drahtgeflecht umgibt den Potential führenden Leiter und ist an das gleiche Potential angeschlossen. Das erste Drahtgeflecht ist elektrisch mit einer Schaltvorrichtung verbunden. Da es mit Sicherheit beim gewaltsamen Durchtrennen der Leitungsverbindung zu einem Kontakt zwischen erstem und zweitem Drahtgeflecht kommt, wird die Schaltvorrichtung aktiviert und verbindet den Potential führenden Leiter in Form eines Dauerkurzschlusses mit der Fahrzeug-Masse. Damit ist eine Stromversorgung der für den Betrieb des Kraftfahrzeugs benötigten Aggregate (insbesondere des Anlassers) auf Dauer nicht mehr möglich. Für die Kurzschlußschaltung ist die Verwendung eines relaisgestützten Systems von besonderem Vorteil.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1 eine vorteilhafte Ausführungsform der Erfindung in schematisierter Schnittdarstellung,

Figur 2 eine günstige Weiterbildung der in Figur 1 gezeigten Ausführung als Detail,

Figur 3 eine vorteilhafte Weiterbildung einer in Figur 2 gezeigten Baugruppe,

Figur 4 eine günstige Weiterbildung eines in den Figuren 1 und 2 gezeigten Details sowie

Figur 5 eine bevorzugte Ausführungsform für eine Abdeckung der Fahrzeug-Batterie.

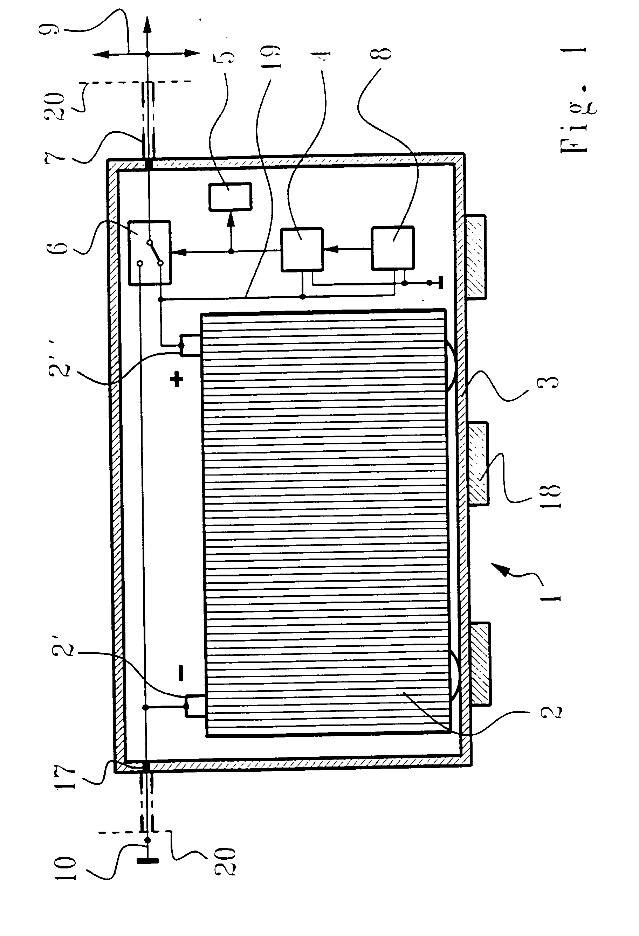

Figur 1 gibt eine schematische Schnittdarstellung einer Diebstahl-sichecungsvoccichtung 1 mit einer FahrzeugBatterie 2 wieder, die entsprechend der Erfindung vollständig gekapselt,. d.h. armiert, ist. Der zur Abtrennung des verbindungskabels bzw. Leiters 9 des Bordnetzes des zu sichernden Kraftfahrzeugs von dem Plus-Pol 2" der Batterie 2 vorgesehene Schalter 6 ist ebenso wie die ihn auslösende Steuerung 4 zusammen mit einem Aktivitätssensor 8 innerhalb des zwischen der Fahrzeug-Batterie 2 bzw. den Polen 2', 2" und der Kapselung 3 befindlichen Freiraum in geeigneter Weise positioniert. Der Aktivitätssensor 8 erfaßt bei in Betrieb befindlicher Sicherheitsvorrichtung 1 eine unbefugte Handlung und schaltet die Steuerung 4 ein, welche den Schalter 6 betätigt und gleichzeitig den Alarmmelder 5 aktiviert. Der Schalter 6 trennt die elektrischen Verbraucher von dem Plus-Pol 2" der Fahrzeug-Batterie 2 und verbindet den Verbraucheranschluß 9' gleichzeitig mit dem Masse-Anschluß des Kraftfahrzeugs, so daß auch durch Anschluß einer anderen Batterie das Kraftfahrzeug nicht in Betrieb gesetzt werden kann.

Die Kapselung 3 besteht aus widerstandsfähigem Material und weist eine die Festigkeit erhöhende (nicht dargestellte) Armierung auf. Die Kapselung ist gleichzeitig mit Teilen 18 der Fahrzeug-Karosserie nur mit Spezialwerkzeug lösbar verbunden. Die Stromversorgung der Steuerung 4 und des Aktivitätssensors 8, der in vorteilhafter Weise als Bewegungs-oder Erschütterungsmelder ausgebildet ist, erfolgt direkt über die Batterie-Pole 2' und 2" und ist nach Betätigung des Schalters 6 nicht unterbrochen. Die Position des Sensors 8 ist innerhalb der Batterie-Kapselung besonders günstig, da bei Versuchen, das Fahrzeug unbefugt zu benutzen, die Fahrzeug-Batterie 2 stets in dem Handlungsbeceich einbezogen werden muß und dadurch eine Alarmauslösung mit größter Sicherheit zu erwarten ist. Die Leitungsverbindungen 9 und 10, welche zum bestimmungsgemäßen Betrieb des Kraftfahrzeugs aus der Batterie-Kapselung 3 in Form einer Durchführung 17 herausgeführt werden müssen, weisen eine durch eine Armierung gesicherte Umhüllung 7, welche bis zur nächstfolgenden Wandung 20 der Fahrzeug-Karosserie reicht, auf. Dadurch ist insbesondere ein Durchtrennen der Leiterbahn 9 vom Plus-Pol 2' der Batterie 2 zu den elektrischen Verbrauchern des Fahrzeugs nur mit erheblichen Aufwand möglich.

Diese Form der Anordnung der Diebstahl-Sicherungsvorrichtung 1 stellt in günstiger Weise sicher, daß nach einer erfolgten Alarmauslösung die unbefugte Handlung optisch oder akustisch angezeigt wird und der unbefugten Person jegliche Möglichkeit genommen ist, die Alarmauslösung durch Unterbrechen von Leitungsverbindungen oder spannungsabschaltungen zu beenden.

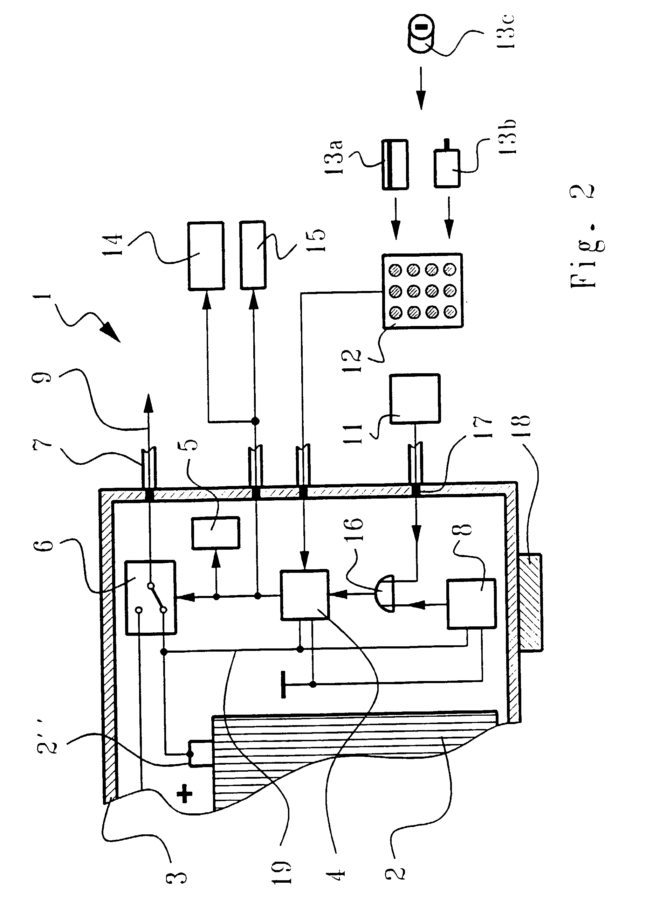

Die in Figur 2 dargestellte Weiterbildung zeigt in Form eines Teilschnitts der Diebstahl-Sicherungsvorrichtung eine Möglichkeit zur Verbesserung der Empfindlichkeit bzw. Funktionssicherheit des systems. Die Diebstahl-Siche-rungsvorrichtung weist dazu mehrere Aktivitätssensoren 8, 11 sowie mehrere Alarmmelder 5, 14, 15 auf, von denen jeweils mindestens einer innerhalb der Kapselung 3 angeordnet ist. Eine als ODER-Glied ausgebildete Verknüpfungsschaltung 16 gewährleistet dabei, daß die Steuerung 4 eingeschaltet wird, wenn mindestens einer der Sensoren 8, 11 eine unbefugte Handlung "wahrnimmt". Von den außerhalb der Kapselung 3 angeordenten Alarmmeldern 14 und 15 weist das System 14 eine von der Fahrzeug-Batterie 2 unabhängige Stromversorgung aus, um für Eventualfälle eine Alarmanzeige zu gewährleisten. Für die Positionierung des zweiten, vorzugsweise als elektrischer Schließkontakt ausgebildeten Aktivitätssensors 11 sind die Verschlüsse an den Türen oder der Kofferhaube des Kraftfahrzeugs vorgesehen.

Um die Steuerung 4 (und damit die gesamte Diebstahl-Sicherungsvorrichtung 1 in Betriebsbereitschaft zu versetzen bzw. außer Betrieb zu nehmen, ist eine im Fahrzeug befindliche Kode-Eingabeeinrichtung 12 vorgesehen. Die Eingabe des Berechtigungs-Kodes erfolgt über eine Ziffern-Tastatur oder eine entsprechend ausgebildete Magnetkarte 13a. Alternativ ist eine Aktivierung der Steuerung mittels eines Türkontakts 13b bei Schließen der Fahrertür und die erforderliche Deaktivierung mit einem am Zündschloß 13c vorgesehenen Kode durch Betätigen des Zündschlosses 13c sinnvoll. Eine nicht dargestellte Verzögerungsschaltung gewährleistet bei einer wählbaren Zeitkonstanten (vorzugsweise 30 sec), daß einer befugten Person in ausreichendem Maße Zeit zur Verfügung steht, das Kraftfahrzeug bei aktivierter Diebsiahl-sicherungsvorrichiung zu betreten bzw. zu verlassen.

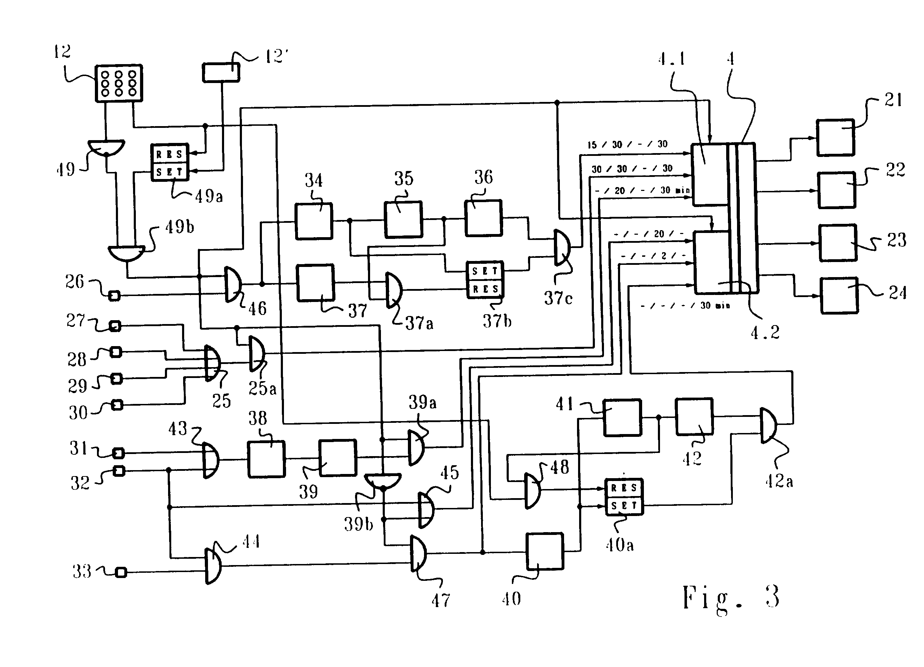

Figur 3 zeigt das Blockschaltbild einer weiteren Ausführungsform der erfindungsgemäßen Diebstahl-sicherungsvorrichtung mit einer Steuerung 4 zum Aktivieren von unterschiedlichsten Alarm- und Sicherungsfunktionen. Bei dargestellten Ausführungsbeispiel ist auch eine Sicherung gegen "Car-Jacking eingeschlossen. Die Steuerung 4 ist in der schematischen Darstellung in zwei Bereiche 4.1 (aktivierter Zustand der Anlage) und 4.1 nicht aktivierter Zustand der Anlage) gegliedert. Dabei führen die unterschiedlichen an Sensoren 26 bis 33 aufgenommenen Signale zu verschiedenen das Wegfahren des Fahrzeugs unterbindenen Signalen bzw. Alarmfunktionen. Dabei stellt der Block 21 einen Signalgeber im Bereich der Abdeckhaube des Kofferraums als Sofortalarm, der Block 22 einen Signalgeber im Inneren des Fahrzeugs, der Block 23 einen Signalgeber für ein akustisches Indikatorsignal und der Block 24 den Auslöser für die Wegfahrsperre dar. Die bei den Blöcken 4.1 und 4.2 angegebenen ziffernfolgen geben die Auslösezeiten für die drei Signalgeber 21 bis 23 bzw. die Wegfahrsperre 24 in der entsprechenden Reihenfolge an. Wenn keine Maßzahl angegeben ist, handelt es sich bei den zeitangaben um Sekunden.

Über die Kode-Eingabeeinrichtung 12 kann die Diebstahl-Sicherung bei Werkstattaufenthalten durch Eingabe eines entsprechenden Kodes außer Funktion gesetzt werden. Über dieselbe Tastatur wird durch Eingabe eines anderen entsprechenden Codes die Anlage außer Funktion gesetzt bzw. nach dem Öffnen der Fahrertür "entschärft". Dies erfolgt über den Rücksetz-Eingang eines diesen Zustand festhaltenden Flip-Flops 49a. Die Alarmfunktion läßt sich aktivieren über eine Taste 12', welche den Setz-Eingang des Flip-Flops 49a ansteuert.

Sämtliche Alarmzustände setzen voraus, daß die Diebstahl-Sicherungsvorrichtung mittels ihrer Kode-Eingabeeinrichtung 12 nicht für den Werkstattbetrieb programmiert ist. Darüberhinaus sind Abschaltfunktionen, beispielsweise für die Vereitelung einer erkannten Car-Jacking-Absicht, vorgebbar. Durch Eingabe des anlagenspezifischen Sicherheits-Codes ist die Diebstahl-Sicherungsvorrichtung deaktivierbar. Die Ausgangssignale des Flip-Flops 49a und das invertierte Signal "Werkstatt"-Betrieb werden über ein UND-Gatter 49b zusammengefaßt, welches ein Ausgangssignal abgibt, wenn die Alarmfunktion nicht gesperrt oder unterbunden ist.

Der Sofortalarm wird entweder durch Ansprechen eines Sensors 27 bei Öffnen der Motorhaube, durch Ansprechen eines Bewegungs-/Lage-Sensors 28, durch Ansprechen eines Glasbruch-Sensors 29 oder durch Ansprechen eines Sensors 30, der die bei Einschalten elektrischer Verbraucher entstehenden spannungsschwankungen erfaßt, ausgelöst. Das ODER-Gatter 25 aktiviert über ein nachfolgendes UND-Gatter 25a (freigeschaltet durch den Negator 49, der eine mögliche Kodierung für einen Werkstatt-Betrieb erfaßt) die Steuerung 4 und löst für 30 Sekunden einen Signalgeber 21 in der Kofferraum-Abdeckhaube und einen Signalgeber 22 im Fahrzeuginnenraum aus. Die wegfahrsperre 24 des Fahrzeugs wird für 30 Sekunden aktiviert.

Ein verzögerter Alarm (Mindestverzögerung 30 Sekunden) wird durch Ansprechen von Sensoren 31 oder 32 ausgelöst, die auf das Betätigen der zentralverriegelung bzw. das Öffnen der Fahrertür oder das Öffnen einer beliebigen anderen Tür des Fahrzeugs ansprechen. Die Sensorsignale werden über das ODER-Gatter 43 und die Impulsformer- bzw. Verzögerer-Baugruppe 38, 39 zur Steuerung 4 weitergeleitet. Aktiviert werden nach der durch Programmierung vorgegebenen Verzögerungszeit von ein bis neunfachen eines Zeitraums von 30 sec die Signalgeber 21 und 22. Gleichzeitig wird nach Ablauf der Verzögerungzeit die Wegfahrsperre 24 wirksam. Eine Deaktivierung der Anlage erfolgt durch Eingabe des Sicherheits-Codes.

Bei einem zusätzlich vorgesehenen Voralarm mit anschließendem Sofortalarm wird ein kleiner Signalgeber 23 im Fahrzeuginnenraum aktiviert, wenn der Sensor 26 eine Öffnung des Kofferraums signalisiert. Die Sensorsignale werden über die Impulsformer- bzw. Verzögerungsstufen 34, 35, 36, 37 an die Steuerung 4 weitergeleitet. Nur wenn der Kofferraumdeckel innerhalb von 15 Sekunden wieder geschlossen wird, erfolgt keine Ausgabe eines Sofortalarms. Dabei wird durch ein Ausgangssignal des UND-Gatters 46 über den Impulsformer 34 zunächst das Flip-Flop 37b geund dieses über einen weiteren Impulsgeber 37 und ein UND-Gatter 37a wieder zurückgesetzt, wenn dieses innerhalb von der Aktivierung des Zeitgebers 35 erfolgt, der als monostabiler Multivibrator aufgebaut ist und für 15 sec ein Ausgangssignal liefert.

Ein Öffnen der Zentralverriegelung (Sensor 31) oder ein Öffnen der Fahrertür (Sensor 32) führen über ein ODER-Gatter 43 zu einem Ansteuersignal für eine Verzögerungsschaltung 38, welche eine Zeitverzögerung von 30 sec auslöst. Das Ausgangssignal der Verzögerungsschaltung 38 wird dann an einen Impulsformer 39 weitergegeben, dessen Ausgangssignal über ein UND-Gatter 39a für 20 sec ein Signal im Fahrzeuginnenraum abgibt, welches bei generell aktivierter Anlage auf die Möglichkeit der Eingabe des Tastencodes zum Unterbinden der Sicherheitsfunktion hinweist.

Bei jeder Türbetätigung bei nicht aktivierten Sicherheitsfunktionen (Ausgangssignal des Inverters 39b HIGH) wird über ein UND-Gatter 45 ein kurzes Bestätigungssignal von 2 sec Dauer als Quittungssignal erzeugt.

Die Sicherung des Fahrzeugs bei einem Car-Jacking-Versuch erfolgt die Aktivierung des kleinen Signalgebers 23 im Fahrzeuginnenraum. Gleichzeitig wird dabei die Wegfahrsperre 24 für 30 Minuten aktiviert, falls nicht innerhalb von 20 Sekunden der deaktivierende Sicherheits-Code erneut eingegeben wird.

Voraussetzung für diese Sicherungsmaßnahme ist, daß bei angelegtem Sicherheitsgurt, dessen Position von einem Sensor 33 erfaßt wird, ein Öffnen der Fahrertür erfolgt. Hierzu wird das Ausgangssignal des Sensors 32 über ein UND-Gatter 44 mit dem Signal des Sensors 33 verknüpft. Die Aktivierung des Sensors erfolgt dabei über den äußeren Türkontakt, wie dies auch für die Aktivierung der Wegfahrsperre wichtig ist. Eine Türbetätigung von innen bleibt dagegen ohne Einfluß.

Das Ausgangssignal des UND-Gatters 47 (Entaktivierung der Wegfahrsperre während des siarivorgangs durch ordnungsgemäße Eingabe des Sicherheitscodes über die Tastatur 12 und Türbetätigung bei angelegtem Sicherheitsgurt) führt über einen Impulsformer 40 einerseits zu einem Setzen des Flip-Flops 40a und andererseits zu einem Starten des Zeitgebers 41 für einen Zeitraum von 20 sec. Das Ausgangssignal des Zeitgebers gelangt über einen Impulsformer zu einem UND-Gatter 42a, welches die Wegfahrsperre 24 über den Controller 4.2 für 30 min auslöst. Während des Ansprechens des Zeitgebers 42 kann das Eintreten der Wegfahrsperre noch durch erneutes Eingeben des korrekten Tastaturcodes unterbunden werden. Hierbei erfolgt ein Zurücksetzen des Flip-Flops 40a über das UND-Gatter 48.

Die Steuerung 4 ist zweistufig ausgebildet. Die einzelnen Ziffernfolgen an den beiden Steuerungsstufen 4.1 und 4.2 enthalten die Zeitspannen (Angabe in Sekunden bzw. Minuten), für die die einzelnen Alarmsysteme - entsprechend bestimmter Vorgaben - aktiviert werden. Die zweite Ziffernfolge der Steuerungsstufe 4.1 gibt beispielsweise an, daß bei einem Sofortalarm ein Signalgeber im Fahrzeuginnenraum und ein zweiter Signalgeber in der Abdeckhaube sowie die Wegfahrsperre für jeweils 30 Sekunden aktiviert werden, wenn die Alarmanlage scharf geschaltet ist und die eingebauten Sensoren ansprechen.

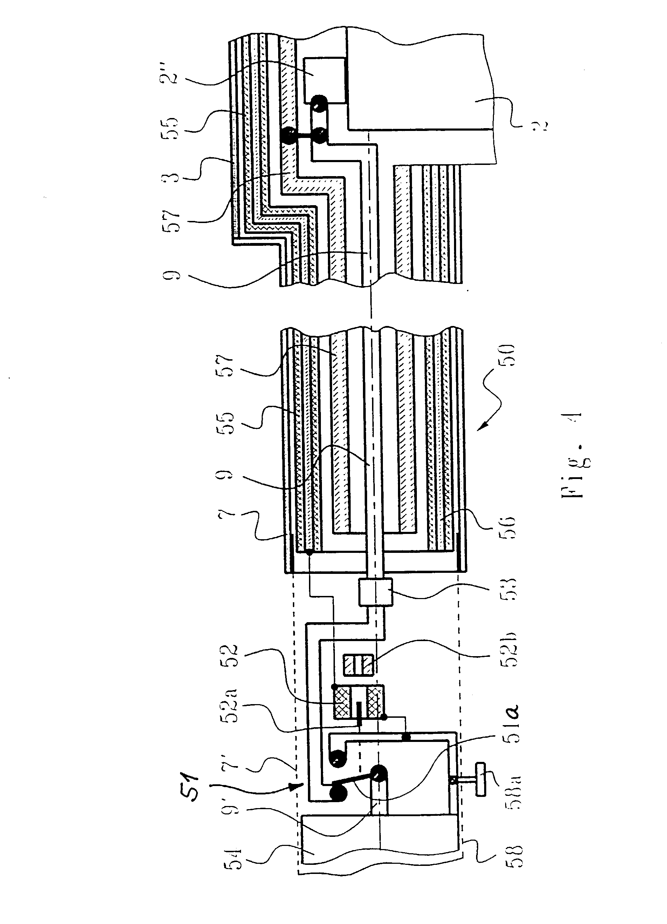

Figur 4 zeigt in schematischer Darstellung einen Längsschnitt durch ein armiertes, mit dem Plus-Pol der Batterie verbundenes Anschlußkabel 50, welches an einen elektrischen Verbraucher 54, vorzugsweise den Anlasser oder das Anlasserrelais, des zu sichernden Kraftfahrzeuges unter Benutzung eines Leitungsverbinders 53 angeschlossen ist. Innerhalb der äußeren Armierung 7, welche in Form eines Rohres oder aneinander gereihter, beweglich miteinander verbundener Ringe den spannungsführenden Leiter 9 umgibt, sind zusätzlich ein erstes und ein zweites Drahtgeflecht 56, 57, vorzugsweise als Kupfergeflecht mit relativ geringer Maschenweite ausgebildet, vorgesehen. Das erste Drahtgeflecht 56 ist vollständig von der Leitungsisolation 55 eingeschlossen. Das zweite Drahtgeflecht 57 umschließt den Leiter 9 und führt das gleich Potential wie dieser, der mit dem Pluspol der Batterie verbunden ist. Die räumliche Entfernung des zweiten Drahtgeflechts 57 von dem Leiter 9 sorgt für eine Auslösen des Schalters 51, noch bevor der Leiter 9 selbst durch das Schneidwerkzeug beschädigt werden kann. Auf dieses weitere Drahtgeflecht kann aber gegebenenfalls verzichtet werden.

Am anderen Ende des Leiters 9 - entweder kurz vor dem Verbraucher 54 oder mit diesem in ein armiertes Gehäuse 7' integriert $\bar{V}$ ist eine mit einem Magnetantrieb 52 versehene Schaltvorrichtung 51 vorgesehen, durch welche durch einen entsprechenden Umschaltkontakt 51a bei Aktivierung zunächst einmal der entsprechende Anschluß des Verbrauchers 54 von dem Leiter 9 abgetrennt eine Verbindung zwischen dem Anschluß 9' des Verbrauchers und dem Potential der Fahrzeug-masse 58 (Kurzschluß) hergestellt werden kann.

Damit ist dafür gesorgt, daß dieser Kurzschluß dann unabwendbar hervorgerrufen wird, wenn gewaltsam mit einem metallischen Trennwerkzeug versucht wird, das Anschlußkabel 50 aufzutrennen, um eine externe Batterie mit den elektrischen Verbraucher, insbesondere dem Anlasser, zum Starten des Fahrzeugs zu verbinden.

Bei diesem Abtrennversuch entsteht über das benutzte Werkzeug kurzzeitig eine elektrische Verbindung zwischen den beiden Drahtgeflechten 56, 57, wodurch der Magnetantrieb 52 mit der Batteriespannung versorgt wird und durch Zurückziehen seines Ankers 52a den Schaltkontakt 51a betätigt. Durch diesen wird die Zuleitung 9' des Verbrauchers zunächst von dem Leiter 9 getrennt und anschließend mit der Fahrzeugmasse 58a verbunden.

Der schaltkontakt ist auch durch eine Kugel realisierbar, wobei die Kugel durch den Magnetantrieb 52 aus ihrer Lage bewegbar ist. Die Kugel fällt irreversibel nach unten und erzeugt die gewünschte Masseverbindung.

Dadurch ist es unmöglich, den elektrischen Verbraucher 54 in Betrieb zu nehmen. Das Fahrzeug ist damit vor unbefugter Benutzung auch nach einem derartigen gewaltsamen Eingriff gesichert, da es kaum möglich ist, den Ort der Masseverbindung zu ermitteln und diese Verbindung zu beseitigen.

Wie im rechten Teil der Figur 4 erkennbar ist, kann die leitende, bei zerstörungsversuch mit einem leitenden Werkzeug einen für den Startvorgang des Kraftfahrzeugs wesentlichen Verbraucher abschaltende oder leitend überbrückenden Schaltvorgang auslösende Armierungsschicht auch die Batterie 2 selbst mindestens teilweise umgeben. Auf diese Weise kann auch im Übergangsbereich zur Batterie hin und in deren Kapselung nicht eingegriffen werden, ohne daß nicht nur eine Wegfahrsperre ausgelöst wird, sondern das Fahrzeug darüberhinaus ohne wesentlichen Reparatureingriff nicht mehr gestartet werden kann. Wenn der Schalter 51 beispielsweise in das robuste Gehäuse des Startermotors oder seines Schaltrelais integriert ist, müssen beide Teile zeitaufwendig ausgetauscht werden, ehe das Kraftfahrzeug wieder betriebsfähig ist.

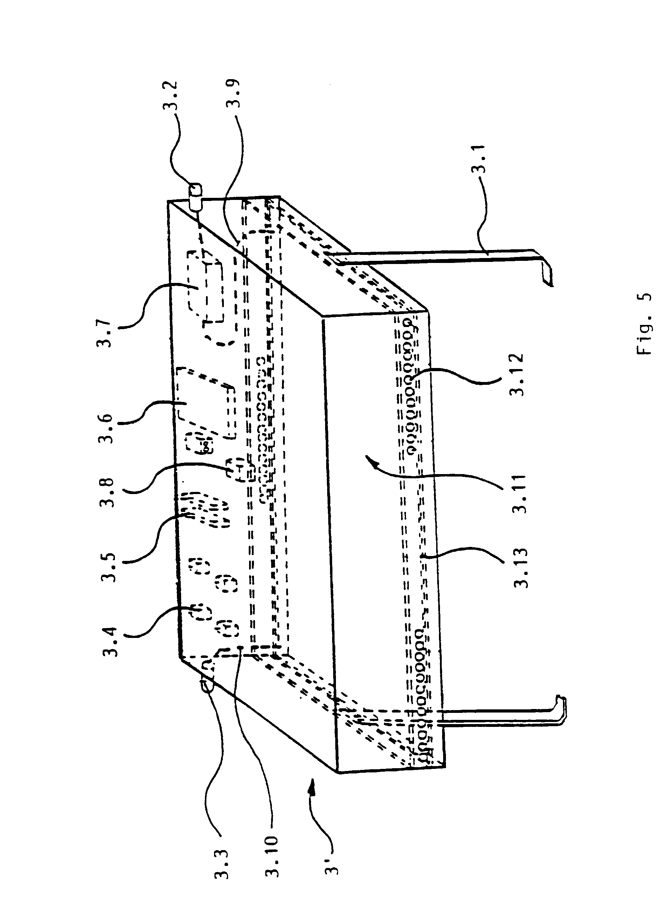

Die in Figur 5 dargestellte Ausführungsform der Erfindung mit einer als Abdeckung 3' für den Bereich der Batterie-Pole ausgebildeten Kapselung weist an ihren Schmalseiten jeweils eine Halteklammer 3.1 auf, mit der die aus einem festen, mit einer Armierung versehenen Werkstoff bestehende und dadurch im wesentlichen nicht auf einfache Weise zerstörbare Abdeckung 3' für Unbefugte unlösbar an dem Gehäuse der Fahrzeug-Batterie befestigt werden kann. Die Halteklammern 3.1 umgreifen dabei gleichzeitig Teile der Fahrzeug-Karosserie (beispielsweise die Auflagekonsolen für die Batterie) und verhindern dadurch in vorteilhafter Weise, daß - um die Diebstahl-Sicherungsvorrichtung funktionsunfähig zu machen - die Batterie-Anschlüsse zugänglich gemacht werden können bzw. die Fahrzeug-Batterie komplett entfernt werden kann.

Eine am unteren Rand an der Innenseite der Abdeckung 3' umlaufende Kante 3.14 gewährleistet, daß die Abdeckung 3' in stabiler Position auf die Oberseite der Fahrzeug-Batterie aufgesetzt werden kann. Der oberhalb der umlaufenden Kante 3.14 befindliche Boden 3.12 schließt die Abdeckung 3' nach unten ab und bildet dadurch einen geschützten Hohlraum, in welchem die erforderlichen elektrischen bzw. elektronischen Baugruppen der Diebstahl-Sicherungsvorrichtung (vergleiche die Positionen 4, 5, 6, 8 in den Figuren 1 und 2) positioniert werden können. Zu diesem Zweck sind innerhalb der Abdeckung 3' die notwendigen Halterungen und Befestigungsvorrichtungen 3.4, 3.5, 3.6, 3.8 angeformt. Der Trennschalter 3.7 ist direkt in das Kabel 3.9 eingebunden. Die nach außen geführten Batterieanschlußkabel 3.9 und 3.10 weisen außerhalb der Abdeckung armierte Verbindungselemente 3.2 und 3.3 auf, welche eine unbefugte Unterbrechung der Verbindungsleitungen mit normalem Aufwand unmöglich machen oder zumindest erheblich erschweren.

Die Seitenwandungen der Abdeckung 3' weisen zwischen dem Boden 3.11 und der innen umlaufenden Kante 3.13 eine Anzahl von Lüftungslöchern in Form von Durchbrüchen 3.12 auf, die ein Entgasen der Fahrzeug-Batterie bei der Ladung im erforderlichen Umfang auch bei im übrigen gegen Zugriff hermetisch geschlossener Kapselung ermöglichen.

**Patentansprüche**

1. Vorrichtung (1) zur Sicherung eines Kraftfahrzeugs vor Diebstahl und/oder unbefugter Benutzung mit einem Aktivitätssensor (8,11) und einem nachgeschalteten Alarmgeber (5) und/oder einer Vorrichtung (4,6;24,51), welche als Wegfahrsperre eine wesentliche Betriebsfunktion des Kraftfahrzeugs sperrt, wobei eine gepanzerte Kapselung (3, 3') für mindestens den nicht mit der Fahrzeugmasse verbundenen Anschlußpol (2") der Fahrzeugbatterie (2) und den Alarmgeber bzw. die Vorrichtung (4, 6, 51), welche die wesentliche Betriebsfunktion des Kraftfahrzeugs sperrt, vorgesehen sowie ein Leiter (9) vom nicht mit der Fahrzeugmasse verbundenen Batterie-pol (2") zur die wesentliche Betriebsfunktion ausführenden Baugruppe (54) des Kraftfahrzeugs bis zur nächsten Verzweigung und/oder zum nächsten Durchbruch durch eine Metallwandung (20) des Fahrzeugs armiert ist,
**dadurch gekennzeichnet, daß**
der Leiter (9) mit einer Leitungsisolation (55) versehen ist, die den Leiter galvanisch von einem die Leitungsisolation umgebenden, insbesondere als Drahtgeflecht ausgestalteten, leitenden Mantel (56) trennt, der mit einer Schaltereinrichtung (51) verbunden ist, welche, wenn der Mantel mit dem Leiter (9) leitend verbunden ist, die Baugruppe (54) von dem Leiter (9) trennt.

2. Vorrichtung nach Anspruch 1,
**dadurch gekennzeichnet, daß**
die Kapselung (3) der Batterie (2) mindestens teilweise zwei voneinander isolierte leitende Schichten (56, 57) aufweist, welche bei Zerstörung der Kapselung mit einem elektrisch leitenden Werkzeug verbunden werden, wobei die innere Schicht (56) mit dem mit dem Leiter (9) verbundenen Batteriepol (2") oder mit dem Leiter selbst elektrisch verbunden ist, während die äußere leitende Schicht (57) mit einer Schalteinrichtung (51) verbunden ist, welche, wenn die Schichten (56, 57) miteinander leitedne verbunden sind, die Baugruppe (54) von dem Leiter (9) trennt.

3. Vorrichtung nach Anspruch 1 oder 2, **dadurch gekennzeichnet,** daß die Schalteinrichtung (51) die die wesentliche Betriebsfunktion ausführende Baugruppe (54) nach dem Abtrennen von dem Leiter (9) mit Massepotential des Fahrzeugs verbindet.

4. Vorrichtung nach einem der vorangehenden Ansprüche, **dadurch gekennzeichnet,** daß es sich bei der die wesentliche Betriebsfunktion ausführenden Baugruppe (54) um den Anlasser oder das Anlasserrelais des Kraftfahrzeugs handelt.

5. Vorrichtung nach einem der vorangehenden Ansprüche, **dadurch gekennzeichnet**, daß sich die Schalteinrichtung (51) in der Nähe der die wesentliche Betriebsfunktion ausführenden Baugruppe (54) auf der der Batterie (2) abgewandten Seite des Leiters (9) befindet.

6. Vorrichtung nach einem der vorangehenden Ansprüche, **dadurch gekennzeichnet,** daß die Schalteinrichtung (51) derart monostabil ausgeführt ist, daß sie ihre betätigte Lage nach der Aktivierung beibehält.

7. Vorrichtung nach einem der vorangehenden Ansprüche, **dadurch gekennzeichnet,** daß die Schalteinrichtung (51) einen von einer Magnetspule betätigten magnetisierbaren Anker (52a) aufweist, der in der betätigten Lage von einem benachbarten ferromagnetischen Element angezogen gehalten bleibt.

8. Vorrichtung nach einem der Ansprüche 1 oder 3 bis 7, **dadurch gekennzeichnet,** daß die galvanische Verbindung der Leitungsader (9) mit dem leitenden Mantel (56) mittelbar über eine weitere, die Leitungsader umgebendende, mit dieser permanent galvanisch verbundene, elektrisch leitende Ummantelung (57) erfolgt.

9. Vorrichtung nach einem der vorangehenden Ansprüche, **dadurch gekennzeichnet**, daß die Vorrichtung, welche eine wesentliche Betriebsfunktion des Kraftfahrzeugs sperrt, einen Schalter (6) umfaßt, welcher auf ein Ausgangssignal eines Aktivitätssensors (8, 11) die Leiterbahn (9) vom nicht mit der Fahrzeugmasse verbundenen Batteriepol (2") unterbricht.

10. Vorrichtung nach Anspruch 9, **dadurch gekennzeichnet,** daß der Schalter (6) bei Unterbrechung der Leiterbahn (9) den vom Batteriepol (2") abgetrennten Teil der Leitung mit der Fahrzeugmasse (10) verbindet.

11. Vorrichtung nach einem der vorangehenden Ansprüche, **dadurch gekennzeichnet**, daß die gepanzerte Kapselung (3, 3') zusätzliche, ausschließlich mit einem Schlüssel oder Code entriegelbare, Sicherungsmittel aufweist, ohne deren Entriegelung die Kapselung nicht oder nur mit erheblichen Aufwand lösbar ist.

12. Vorrichtung nach einem der vorangehenden Ansprüche, **dadurch gekennzeichnet,** daß die Kapselung (3) die Fahrzeug-Batterie (2) vollständig umschließt, eine Armierung aufweist und nicht oder nur mit erheblichem Aufwand ohne Entsicherungsmittel lösbar mit Teilen (18) der Karosserie des Fahrzeugs verbunden ist.

13. Vorrichtung nach einem der vorangehenden Ansprüche, **dadurch gekennzeichnet**, daß als Mittel zur Auslösung eines Alarms eine durch den Aktivitätssensor (8, 11) aktivierbare Steuerung (4) vorgesehen ist, wobei die Steuerung (4) und der Aktivitätssensor (8, 11) derart mit der Fahrzeug-Batterie (2) verbunden sind, daß deren Betriebsspannung auch bei geöffnetem Schalter (6) nicht unterbrochen ist.

14. Vorrichtung nach einem der vorangehenden Ansprüche, **dadurch gekennzeichnet**, daß mehrere Alarmgeber (5, 14, 15) vorgesehen sind, von denen mindestens einer innerhalb der Kapselung (3, 3') angeordnet ist und/oder mindestens einer der außerhalb der Kapselung vorgesehenen Alarmgeber (14, 15) eine eigene Stromversorgung unabhängig von der Fahrzeugbatterie (2) aufweist.

15. Vorrichtung nach einem der vorangehenden Ansprüche, **dadurch gekennzeichnet**, daß ein zusätzlicher Sensor (11) außerhalb der Kapselung (3, 3') der Fahrzeugbatterie (2) vorgesehen ist.

16. Vorrichtung nach Anspruch 15, **dadurch gekennzeichnet,** daß der zusätzliche Sensor (11) ein anderes Wirkprinzip aufweist, d.h. auf eine andere Eingangsgröße anspricht, als der in der Kapselung (3, 3') der Fahrzeugbatterie (2) befindliche Aktivitätssensor (8).

17. Vorrichtung nach Anspruch 16, **dadurch gekennzeichnet,** daß der Sensor (11) als Leitungskontakt, vorzugsweise als Türkontakt und/oder Haubenkontakt ausgebildet ist.

18. Vorrichtung nach einem der vorangehenden Ansprüche, **dadurch gekennzeichnet**, daß die Steuerung (4) einen kodierbaren Schaltkreis aufweist, mit dem die Diebstahl-Sicherungsanlage (1) über einen extern kodierbaren Informationsgeber (12, 13b, 13c) in Betriebsbereitschaft gesetzt oder außer Funktion gesetzt werden kann.

19. Vorrichtung nach Anspruch 18, **dadurch gekennzeichnet**, daß der externe Informationsgeber der Steuerung (4) für die Aktivierung bzw. Deaktivierung als Türkontakt an der Fahrertür zur Aktivierung bzw. als kodierbares Zündschloß zur Deaktivierung ausgebildet ist.

20. Vorrichtung nach einem der Ansprüche 18 bis 19, **dadurch gekennzeichnet,** daß der externe Informationsgeber für die Steuerung (4) über eine Tasteneingabe (12) und/oder einen Nummern-Kode oder eine einführbare Kode-Karte (13a) aktivierbar ist.

**21.** Vorrichtung nach einem der Ansprüche 18 bis 20, **dadurch gekennzeichnet,** daß für die Steuerung (4) ein Controller vorgesehen ist, durch welchen Alarm- und Sicherungsfunktionen mit unterschiedlichem Zeittakt und unterschiedlicher Sicherheitswirkung betrieben werden können.

**22.** Vorrichtung nach Anspruch 21, **dadurch gekennzeichnet,** daß der Controller elektronische Mittel in Form von Impulsformer- und Verzögerungsschaltungen (34, 35, 36, 37, 38, 39, 40, 41, 42) und diese Schaltungen ansteuernde Gatter (43, 44, 45, 46, 47, 48) aufweist.

**23.** Vorrichtung mit einer Wegfahrsperre (24) nach einem der vorangehenden Ansprüche, zum Schutz vor einer unbefugten Benutzung in Form von Car-Jacking,
**dadurch gekennzeichnet,**
daß elektronische Schaltmittel (34 bis 48) vorgesehen sind, die die im entaktivierten Zustand befindliche wegfahrsperre, vorztugswesie für einen Zeitraum von im wesentlichen 30 Minuten, erneut aktivieren, wenn an dem Fahrzeug ein äußerer Türgriff, insbesondere der Türgriff der Fahrertür, in Funktion gesetzt wird und/oder ein auf Aktivitäten im äußeren Karosseriebereich reagierender Erschütterungsensor (28) anspricht.

**24.** Vorrichtung nach Anspruch 23, **dadurch gekennzeichnet,** daß die elektronischen Schaltmittel (34 bis 48) die Wegfahrsperre (24) erneut aktivieren, wenn die Deaktivierung der wegfahrsperre durch Eingabe einer vorgegebenen ziffernkombination erfolgt ist.

**25.** Vorrichtung nach Anspruch 23 oder 24, **dadurch gekennzeichnet**, daß die elektronischen Schaltmittel (34 bis 48) aktivierbar sind, wenn die Zündung eingeschaltetet und/oder der Sicherheitsgurt des Fahrers angelegt ist.

**26.** Vorrichtung nach Anspruch 24, **dadurch gekennzeichnet,** daß die Aktivierung der wegfahrsperre durch Eingabe der zuvor zu deren Deaktivierung eingegebenen Zifferfolge mindestens für den Zeitraum der erneuten Aktivierung gegen Deaktivierung gesperrt ist.

**27.** Vorrichtung nach einem der Ansprüche 23 bis 26, **dadurch gekennzeichnet**, daß die Aktivierung durch Eingabe eines zum Deaktivieren der wegfahrsperre (24) üblicherweise erforderlichen Kodes nicht aufgehoben werden kann.

**Claims**

**1.** Apparatus (1) for the protection of a motor vehicle against theft and/or unauthorised use, comprising an activity sensor (8, 11) and a connected warning element (5) and/or a device (4, 6; 24, 51) which, acting as a drive-off preventor, blocks an essential operational function of the motor vehicle, wherein an armoured casing (3, 3') is provided for at least the terminal (2") of the vehicle battery (2) not connected to the vehicle earth and for the warning element or the device (4, 6, 51) blocking the essential operational function of the motor vehicle, and a conductor (9) from the battery terminal (2") not connected to the vehicle earth to the vehicle component (54) carrying out the essential operational function is armoured up to the next junction and/or the next opening through a metal wall (20) of the vehicle, characterised in that the conductor (9) is provided with a conductor insulation (55) which separates the conductor galvanically from a conductive sheathing (56), constructed in particular as a wire mesh, which surrounds the conductor insulation and is connected to a switching arrangement (51) which disconnects the component (54) from the conductor (9), when the sheathing is conductively connected to the conductor (9).

**2.** Apparatus according to claim 1, characterised in that the casing (3) of the battery (2) has, at least in part, two mutually insulated conductive layers (56, 57) which are connected by an electrically conductive tool during destruction of the casing, the inner layer (56) being electrically connected to the battery terminal (2") connected to the conductor (9) or to the conductor itself, while the outer conductive layer (57) is connected to a switching arrangement (51) which disconnects the component (54) from the conductor (9) when the layers (56, 57) are mutually conductively connected.

**3.** Apparatus according to claims 1 or 2, characterised in that the switching arrangement (51) connects the component (54) carrying out the essential operational function to the earth potential of the vehicle, after disconnection from the conductor (9).

**4.** Apparatus according to one of the preceding claims, characterised in that the component (54) carrying out the essential operational function is the starter or starter relay of the motor vehicle.

**5.** Apparatus according to one of the preceding claims, characterised in that the switching arrangement (51) is positioned in the vicinity of the component (54) carrying out the essential operational function, on the side of the conductor (9) remote from the battery (2).

6. Apparatus according to one of the preceding claims, characterised in that the switching means (51) is of a monostable construction so that it retains its activated state after activation.

7. Apparatus according to one of the preceding claims, characterised in that the switching means (51) has a magnetisable armature (52a) activated by a magnetic coil, said armature remaining attracted by an adjacent ferromagnetic element in the activated state.

8. Apparatus according to claims 1 or 3 to 7, characterised in that the galvanic connection of the conductive wire (9) with the conductive sheathing (56) is indirectly effected via a further electrically conductive sheathing (57), which surrounds the conductive wire and with which it is permanently galvanically connected.

9. Apparatus according to one of the preceding claims, characterised in that the device which blocks an essential operational function of the motor vehicle comprises a switch (6) which interrupts the conducting track (9) from the battery terminal (2") not connected with the vehicle earth, on an output signal of an activity sensor (8, 11).

10. Apparatus according to claim 9, characterised in that the switch (6), when the conducting track (9) is interrupted, connects the part of the circuit disconnected from the battery terminal (2") with the vehicle earth (10).

11. Apparatus according to one of the preceding claims, characterised in that the armoured casing (3, 3') has additional securing means which can only be released by a key or code and without the release of which the casing can only be detached with considerable effort or not at all.

12. Apparatus according to one of the preceding claims, characterised in that the casing (3) completely surrounds the vehicle battery (2), has reinforcement and is connected with parts (18) of the vehicle body so as to be detachable therefrom only with considerable effort or not at all, in the absence of a means of release.

13. Apparatus according to one of the preceding claims, characterised in that a control (4) is provided as a means for triggering-off an alarm, which may be activated by the activity sensor (8, 11), the control (4) and the activity sensor (8, 11) being connected with the vehicle battery (2) in such a way that the operating voltage thereof is not interrupted, even in the event of the switch (6) being open.

14. Apparatus according to one of the preceding claims, characterised in that a plurality of warning elements (5, 14, 15) are provided, of which at least one is arranged within the casing (3, 3') and/or at least one of the warning elements (14, 15) arranged outside the casing has its own current supply independent of the vehicle battery (2).

15. Apparatus according to one of the preceding claims, characterised in that an additional sensor (11) is provided outside the casing (3, 3') of the vehicle battery.

16. Apparatus according to claim 15, characterised in that the additional sensor (11) has a different operating principle, i.e. responds to a different input variable, than the activity sensor (8) positioned in the casing (3, 3') of the vehicle battery (2).

17. Apparatus according to claim 16, characterised in that the sensor (11) is constructed as a circuit contact, preferably as a door contact and/or bonnet contact.

18. Apparatus according to one of the preceding claims, characterised in that the control (4) has a codeable circuit by means of which the anti-theft equipment (1) may be put into an operating condition or out of action, via an externally codeable information transmitter (12, 13b, 13c).

19. Apparatus according to claim 18, characterised in that for the purpose of activation or de-activation, the external information transmitter of the control (4) is constructed as a door contact arranged on the driver's door for activation or as a codeable ignition lock for de-activation.

20. Apparatus according to one of claims 18 to 19, characterised in that the external information transmitter for the control (4) may be activated via a keyed input (12) and/or a number code or an insertable code card (13a)

21. Apparatus according to one of claims 18 to 20, characterised in that a controller is provided for the control (4) by means of which the warning and safeguarding functions may be operated with variable time cycle and variable security action.

22. Apparatus according to claim 21, characterised in that the controller has electronic means in the form of pulse shaper and delay circuits (34, 35, 36, 37, 38, 39, 40, 41, 42) and gates (43, 44, 45, 46, 47, 48) controlling said circuits.

23. Apparatus comprising a drive-off preventor (24) according to one of the preceding claims as protection against unauthorised use in the form of car hijacking, characterised in that electronic switching means (34 to 48) are provided which reactivate the deactivated drive-off preventor, preferably for a period of substantially 30 minutes, if an external door handle of the vehicle, more particularly the handle of the driver's door, is activated and/or a vibration sensor (28) responds to activities in the outer vehicle body region.

24. Apparatus according to claim 23, characterised in that the electronic switching means (34 to 48) reactivate the drive-off preventor (24) when the drive-off preventor has been deactivated through the input of a specified number combination.

25. Apparatus according to claim 23 or 24, characterised in that the electronic switching means (34 to 48) may be activated when the ignition has been switched on and/or the safety belt has been applied.

26. Apparatus according to claim 24, characterised in that the activation of the drive-off preventor by inputting the number sequence previously input for deactivating said preventor is blocked against deactivation, at least during the period of reactivation.

27. Apparatus according to one of claims 23 to 26, characterised in that the activation cannot be suspended by inputting a code normally required for deactivating the drive-off preventor (24).

**Revendications**

1. Dispositif (1) de protection d'un véhicule contre le vol et/ou une utilisation non autorisée équipé d'un capteur d'activité (8, 11) et d'un générateur d'alarme (5) disposé en aval et/ou d'un dispositif (4, 6; 24, 51) qui bloque en tant qu'arrêt de déplacement une fonction d'utilisation essentielle du véhicule, un blindage (3, 3') pour au moins le pôle de raccordement (2") non relié à la masse du véhicule de la batterie de celui-ci (2) et le générateur d'alarme ou le dispositif (4, 6; 51), qui bloque la fonction d'utilisation essentielle du véhicule étant prévus et un conducteur (9) allant du pôle de la batterie (2") non relié à la masse du véhicule jusqu'à l'accessoire (54) assurant la fonction d'utilisation essentielle du véhicule est blindé jusqu'à la dérivation suivante et/ou le passage suivant à travers une paroi métallique (20) du véhicule, caractérisé en ce que le conducteur (9) est muni d'un isolement (55), qui sépare galvaniquement le conducteur d'une enveloppe conductrice (56) entourant l'isolement, en particulier réalisée sous la forme d'un treillis métallique, qui est reliée à un interrupteur (51), qui, lorsque l'enveloppe est réunie de façon conductrice au conducteur, sépare l'accessoire ((4) du conducteur (9).

2. Dispositif selon la revendication 1, caractérisé en ce que le blindage (3) de la batterie (2) présente au moins deux couches conductrices (56, 57) isolées partiellement l'une de l'autre, qui sont réunies lors de la destruction du blindage à l'aide d'un outil électriquement conducteur, la couche intérieure (56) étant reliée électriquement au pôle de batterie (2") relié au conducteur (9) ou au conducteur lui-même, tandis que la couche conductrice extérieure (57) est reliée à un interrupteur (51), qui, lorsque les couches (56, 57) sont réunies de façon conductrice l'une à l'autre, sépare l'accessoire (54) du conducteur (9).

3. Dispositif selon la revendication 1 ou 2, caractérisé en ce que l'interrupteur (51) relie l'accessoire (54) assurant la fonction d'utilisation essentielle après la coupure du conducteur (9) au potentiel de masse du véhicule.

4. Dispositif selon l'une quelconque des revendications précédentes, caractérisé en ce qu'il s'agit dans le cas de l'accessoire (54) assurant la fonction d'utilisation essentielle du démarreur ou du relais de démarreur du véhicule.

5. Dispositif selon l'une quelconque des revendications précédentes, caractérisé en ce que l'interrupteur (51) se trouve à proximité de l'accessoire (54) assurant la fonction d'utilisation essentielle sur le côté éloigné de la batterie (2) du conducteur (9).

6. Dispositif selon l'une quelconque des revendications précédentes, caractérisé en ce que l'interrupteur (51) est réalisé de façon monostable de telle sorte qu'il conserve sa position actionnée après l'activation.

7. Dispositif selon l'une quelconque des revendications précédentes, caractérisé en ce que l'interrupteur (51) comporte une armature (52a) magnétisable excitée par une bobine d'aimant, qui reste attirée dans la position actionnée par un élément ferromagnétique adjacent.

8. Dispositif selon l'une des revendications 1 ou 3 à 7, caractérisé en ce que la liaison galvanique de l'âme du conducteur (9) avec l'enveloppe conductrice (56) s'effectue directement par l'intermédiaire d'une autre enveloppe (57) électriquement conductrice, entourant l'âme du conducteur, reliée galvaniquement en permanence à celle-ci.

9. Dispositif selon l'une quelconque des revendications précédentes, caractérisé en ce que le dispositif, qui bloque une fonction d'utilisation essentielle du véhicule, comprend un commutateur (6), qui lors de la réception d'un signal de sortie d'un capteur d'activité (8, 11) interrompt le trajet conducteur (9) du pôle de batterie (2") non réuni à la masse du véhicule.

10. Dispositif selon la revendication 9, caractérisé en ce que le commutateur (6) lors de l'interruption du conducteur (9) réunit la partie séparée du pôle de batterie (2") du conducteur à la masse du véhicule.

11. Dispositif selon l'une quelconque des revendications précédentes, caractérisé en ce que le blindage (3, 3') présente des moyens de protection supplémentaires, déverrouillables exclusivement à l'aide d'une clé ou d'un code, sans le déverrouillage desquels le blindage ne peut pas être supprimé ou seulement avec un effort considérable.

12. Dispositif selon l'une quelconque des revendications précédentes, caractérisé en ce que le blindage (3) entoure totalement la batterie (2) du véhicule, présente un blindage et n'est pas détachable ou seulement un effort considérable sans moyens de déverrouillage, est réuni à des parties (18) de la carrosserie du véhicule.

13. Dispositif selon l'une quelconque des revendications précédentes, caractérisé en ce qu'en tant que moyen de déclenchement d'une alarme est prévue une commande (4) activable par le capteur d'activité (8, 11), la commande (4) et le capteur d'activité (8, 11) étant reliés à la batterie (2) du véhicule, de telle sorte que la tension de fonctionnement de celle-ci n'est pas interrompue même dans le cas de l'ouverture du commutateur (6).

14. Dispositif selon l'une quelconque des revendications précédentes, caractérisé en ce que plusieurs générateurs d'alarme (5, 14, 15) sont prévus, dont au moins un est disposé à l'intérieur du blindage (3, 3') et/ou au moins un générateur (14, 15) prévu à l'extérieur du blindage présente une alimentation en courant propre indépendante de la batterie (2) du véhicule.

15. Dispositif selon l'une quelconque des revendications précédentes, caractérisé en ce qu'un capteur supplémentaire (11) est prévu à l'extérieur du blindage (3, 3') de la batterie (2) du véhicule.

16. Dispositif selon la revendication 15, caractérisé en ce que le capteur supplémentaire (11) présente un autre principe d'action, c'est-à-dire répond à une autre grandeur d'entrée, que le capteur d'activité (8) se trouvant dans le blindage (3, 3'), de la batterie (2) du véhicule.

17. Dispositif selon la revendication 16, caractérisé en ce que le capteur (11) est réalisé sous la forme d'un contact par conduction, de préférence sous la forme d'un contact de porte et/ou d'un contact de toit.

18. Dispositif selon l'une quelconque des revendications précédentes, caractérisé en ce que la commande (4) comporte un circuit codable, avec lequel l'installation de protection contre le vol (1) peut être mise en ou hors fonctionnement par l'intermédiaire d'un générateur d'information codable extérieur (12, 13b, 13c).

19. Dispositif selon la revendication 18, caractérisé en ce que le générateur d'information extérieur de la commande (4) pour l'activation ou la désactivation est réalisée sous la forme d'un contact de porte sur la porte du conducteur en vue de l'activation ou en tant qu'antivol codable pour la désactivation.

20. Dispositif selon l'une des revendications 18 ou 19, caractérisé en ce que le générateur d'information extérieur pour la commande (4) peut être activé par l'intermédiaire d'un clavier (12) et/ou d'un code à numéros ou d'une carte de code insérable (13a).

21. Dispositif selon l'une quelconque des revendications 18 à 20, caractérisé en ce que pour la commande (4) est prévu un contrôleur, par l'intermédiaire duquel des fonctions d'alarme et de sécurité peuvent être actionnées à un rythme temporel différent et à une action de sécurité différente.

22. Dispositif selon la revendication 21, caractérisé en ce que le contrôleur présente des moyens électroniques sous la forme de circuits conformateurs d'impulsion et de retard (34, 35, 36, 37, 38, 39, 40, 41, 42) et de portes commandant ces circuits (43, 44, 45, 46, 47, 48).

23. Dispositif à blocage de déplacement (24) selon l'une quelconque des revendications précédentes, pour la protection contre une utilisation non autorisée sous la forme de cric,
caractérisé
en ce que des moyens de commutation électroniques (34 à 48) sont prévus, qui activent à nouveau les blocages de déplacement se trouvant dans l'état désactivé, de préférence pour une durée sensiblement de 30 minutes, lorsqu'une poignée de porte extérieure du véhicule, en particulier la poignée de porte du conducteur, est mise en action et/ou un capteur de secousses (28) répond réagissant à des activités à proximité extérieure de la carrosserie.

**24.** Dispositif selon la revendication 23, caractérisé en ce que les moyens de commutation électroniques (34 à 48) activent à nouveau le blocage de déplacement (24) lorsque la désactivation du blocage de déplacement est effectuée par introduction d'une combinaison de chiffres prédéterminée.

**25.** Dispositif selon la revendication 23 ou 24, caractérisé en ce que les moyens électroniques (34 à 48) sont activables, lorsque l'allumage est mis en service et/ou lorsque la ceinture de sécurité du conducteur est bouclée.

**26.** Dispositif selon la revendication 24, caractérisé en ce que l'activation du blocage de déplacement est bloquée par introduction de la succession de chiffres introduites préalablement à sa désactivation au moins pendant la durée de l'activation renouvelée contre une désactivation.

**27.** Dispositif selon l'une des revendications 23 à 26, caractérisé en ce que l'activation ne peut pas être supprimée par introduction d'un code nécessaire habituellement en vue de la désactivation du blocage de déplacement (24).

Fig. 1

Fig. 2

EP 0 682 610 B1

Fig. 3

EP 0 682 610 B1

15 / 30 / — / 30

30 / 30 / — / 30

— / 20 / — / 30 min

— / — / 20 / —

— / — / 2 / —

— / — / — / 30 min

Fig. 4

Fig. 5